# EUROPEAN PATENT SPECIFICATION

(11) **EP 1 629 669 B1**
(45) Date of publication and mention of the grant of the patent: **24.03.2010**
(21) Application number: 04808010.5
(22) Date of filing: 21.12.2004
(51) Int. Cl.: H04N 5/445, H04N 5/45

(54) **PICTURE RECEIVER HAVING PROGRAM RECOMMENDING FUNCTION AND PROGRAM RECOMMENDING METHOD**
BILDEMPFÄNGER MIT PROGRAMMEMPFEHLUNGSFUNKTION UND PROGRAMMEMPFEHLUNGSVERFAHREN
RECEPTEUR D'IMAGE COMPORTANT UNE FONCTION DE RECOMMANDATION DE PROGRAMME ET PROCEDE DE RECOMMANDATION DE PROGRAMME

(30) Priority: 26.12.2003 JP 2003433111
(43) Date of publication of application: 01.03.2006
(73) Proprietor: Panasonic Corporation, Kadoma-shi Osaka 571-8501 (JP)
(72) Inventor: KUSUMOTO, Noritaka, Osaka 567-0826 (JP)
(74) Representative: Pautex Schneider, Nicole Véronique
(86) International application number: PCT/JP2004/019659
(87) International publication number: WO 2005/064929

(56) References cited:
- WO-A-99/04561
- US-A1- 2003 208 758

## Description

### Technical Field

The present invention relates to a picture receiver having program recommending function and a program recommending method for accumulating program information of electronic program lists and providing users with recommended programs in accordance with users' antecedent viewing information and liking information.

### Background Art

Conventionally, as to a picture receiver capable of accumulating program information of electronic program lists, so far realized is a picture receiver which executes a program recommending process according to information such as "programs selected by users" and "programs rather positively selected by users" and provides function of displaying the result and automatic recording of recommended programs. Such a picture receiver is, for example, disclosed in Japanese Patent Laid-Open Application H10-257405.

### Disclosure of the Invention

The invention is a picture receiver according to claim 1 and a program recommending method according to claim 3.

### Brief Description of the Drawings

Fig. 1 is a block diagram showing the configuration of a picture receiver in the preferred embodiment of the present invention.
Fig. 2 is a flow chart showing the operation of a picture receiver in the preferred embodiment of the present invention.
Fig. 3 is a diagram showing a picture display example of a picture display unit in the preferred embodiment of the present invention.

### Detailed Description of the Preferred Embodiments

In a picture receiver, when a recommended program is started on another channel while the user is viewing a program, it is necessary to inform the user of it clearly and effectively.

Then, as a method of informing the user of the recommended program when a recommended program is started on another channel while the user is viewing a program, a possible method is such that the user is informed of the start of the recommended program through a message containing the program name, start time, channel name, etc.

However, in the above informing method, there is a problem that it is necessary for the user to select the channel and actually view the recommended program in order to judge whether or not the user really likes the recommended program. Also, there arises a problem of taking much time.

In the present invention, taking into account the above situations, two pictures are automatically displayed when a recommended program is started on another channel while the user is viewing a program. Thus, the object of the invention is to provide a picture receiver and a program recommending method such that the user is able to view the program on one screen, selecting one out of the two programs displayed.

The present invention will be described in the following together with the preferred embodiment.

### (Preferred embodiment 1)

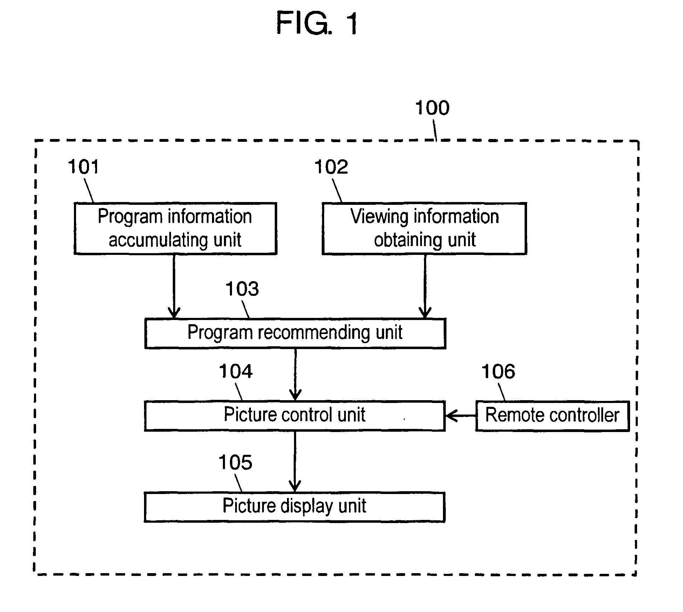

Fig. 1 is a block diagram showing the configuration of a picture receiver in the preferred embodiment 1 of the present invention. Picture receiver 100 comprises program information accumulating unit 101, viewing information obtaining unit 102, program recommending unit 103, picture control unit 104, picture display unit 105, and remote controller 106.

Not mentioned in Fig. 1, but picture receiver 100 also comprises a plurality of tuners, demodulating circuits, video and audio processing circuits. In case picture receiver 100 is compatible with digital broadcast, it is generally provided with a TS decoder, video decoder, and audio decoder.

The tuner fetches the desired high-frequency signal, tuning to the frequency band of the receiving channel, and executes demodulation or error correction of the high-frequency signal. And, it outputs a TS stream (transport stream). The TS stream is supplied to a TS decoder and so on.

The TS decoder decodes the TS stream, and separates the TS stream into a video stream, audio stream, and other auxiliary data. The video decoder restores a video signal on the basis of a video stream from the TS decoder. The audio decoder restores a audio signal on the basis of a audio stream from the TS decoder. The video signal restored by the video decoder is supplied to picture control unit 104. Since there are provided a plurality of tuners, a plurality of video signals are supplied to picture control unit 104. On the other hand, a part of the auxiliary data from the TS decoder is supplied to program information accumulating means 101.

Program information accumulating unit 101 is an example of program information accumulating means. As described above, at least a part of the auxiliary data from the TS decoder is supplied to program information accumulating unit 101. Program information accumulating unit 101 accumulates the desired data about program information out of the auxiliary data supplied. Data about program information includes data such as broadcasters, broadcasting channels, broadcasting time, program titles, outlines, information of casts, and keywords.

Viewing information obtaining unit 102 is an example of viewing information obtaining means. Viewing information obtaining unit 102 accumulates data about program information of programs actually received by picture receiver 100. Data about program information of programs then received are viewing information.

Program recommending unit 103 is an example of program recommending means. Program recommending unit 103 obtains program information from program information accumulating unit 101 and obtains viewing information from viewing information obtaining unit 102. Program recommending unit 103 analyzes viewing information according to a specified algorithm and infers the viewer's liking or the like from the antecedent viewing information and liking information of the user who uses picture receiver 100. And, program recommending unit 103 compares the inferred viewer's liking or the like with the program information from program information accumulating unit 101 and specifies a recommended program that matches the viewer's liking or the like.

Picture control unit 104 and picture display unit 105 make up a picture display means. Picture control unit 104 and picture display unit 105 are a structural example of picture display means.

As already described, at least two programs are supplied to picture control unit 104. One of them is a currently viewing program. The other is a recommended program specified by program recommending unit 103. When a program is recommended by program recommending unit 103, a tuner other than the tuner receiving the currently viewing program is controlled so as to receive the recommended program. And, picture control unit 104 functions to display two pictures of the currently viewing program and the recommended program or to display one picture. Picture display unit 105 is controlled by picture control unit 104, which executes two-picture display and one-picture display.

Remote controller 106 is an example of user's input means. The user operates remote controller 106 to input user's input information to the picture displaying means. Specifically, the input information is inputted to picture control unit 104, and picture control unit 104 executes control for shifting the mode to one-picture display of either the recommended program or the currently viewing program in accordance with the input information.

The user's input means is not limited to remote controller 106. For example, it is possible for the user to operate a control unit disposed in picture receiver 100.

In this way, picture receiver 100 automatically displays two pictures by using two tuners when starting a recommended program, thereby informing the user of the start of the recommended program.

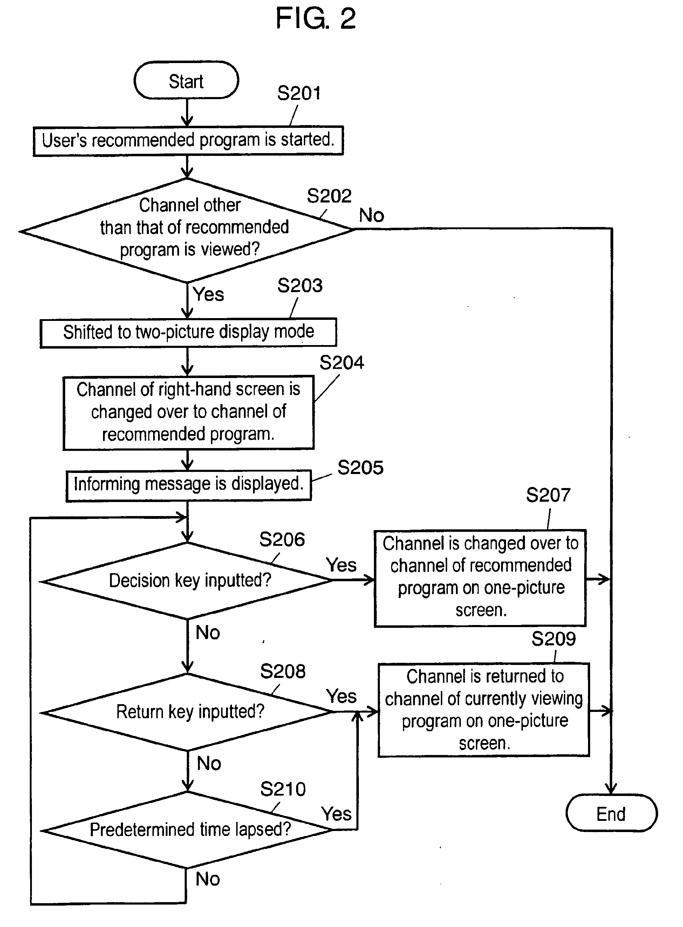

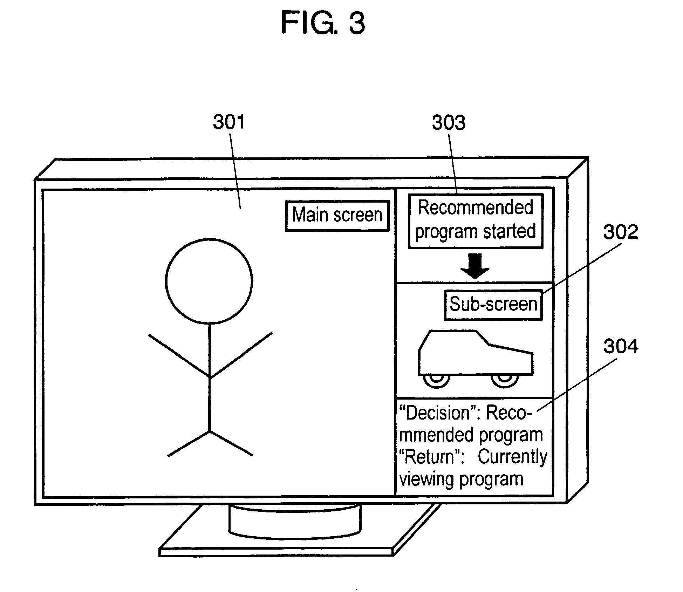

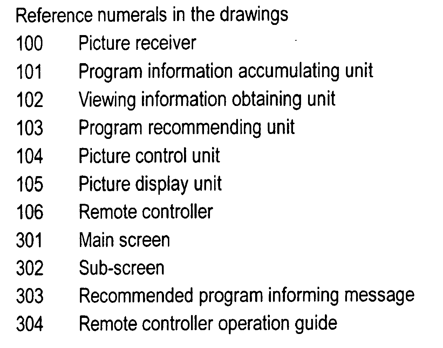

Fig. 2 is a flow chart showing the operation of the picture receiver. Fig. 3 is a picture display example of picture display unit 105. The recommended program informing process of the picture receiver will be further described in the following with reference to Fig. 1, Fig. 2, and Fig. 3.

As described above, the information of program information accumulating unit 101 and viewing information obtaining unit 102 is first inputted to program recommending unit 103. Program recommending unit 103 evaluates the program information and viewing information input in accordance with a predetermined recommendation standard (user's antecedent viewing information and liking information) and judges whether or not the recommended program is on the air or the recommended program is started within the specified time.

When the recommended program is on the air or started within the specified time (S201), whether the channel of the recommended program is being viewed or not is judged (S202). When the channel of the recommended program is being viewed (No in S202), the recommended program informing process is then finished, and the screen is shifted to recommended program viewing mode.

On the other hand, when a channel other than the recommended program is viewed (Yes in S202), picture control unit 104 starts two-picture processing (S203). That is, as shown in Fig. 3, the screen is shifted to two-picture display mode (S204) in which the channel of the currently viewing program is displayed on the left screen (main screen) 301 while the channel of the recommended program is displayed on the right screen (sub-screen) 302. At the same time, message 303 for showing the start of the recommended program and remote controller operation guide 304 for selecting either the currently viewing program or the recommended program by using remote controller 106 are displayed (S205).

When the user selects the recommended program by using remote controller 106, or pushes the "decision" key (Yes in S206), then picture control unit 104 functions to shift the screen from two-picture mode to one-picture mode, and also, to change over the channel to the channel of the recommended program (S207), thereby shifting the screen to recommended program viewing mode.

In case the user selects the currently viewing program by using remote controller 106, or pushes the "return" key (No in S206, Yes in S208), picture control unit 104 functions to shift the screen from two-picture mode to one-picture mode, and also, to return the channel to the channel of the currently viewing program (S209), thereby continuing the mode of viewing on the channel currently viewed.

In this case, with two pictures displayed, if no operation is given by the user for a predetermined time (No in S206, No in S208, Yes in S210), then picture control unit 104 automatically shifts the screen from two-picture mode to one-picture mode, and also, returns the channel to the channel of the currently viewing program (S209), thereby continuing the mode of viewing on the channel currently viewed.

In the above description, the two-picture display structurally includes left-hand screen (main screen) 301 and right-hand screen (sub-screen) 302. However, the present invention is not limited to two-picture display on the right and left screens or on main screen and sub-screen. It is also preferable to adopt upper and lower two-picture display, two-picture superposing display, or superimposing display.

As is obvious in the above description, according to the picture receiver and a program recommending method of the present invention, when a recommended program is started on another channel while the user is viewing a program, it is possible to inform the user of it clearly and effectively.

### Industrial Applicability

In the picture receiver having program recommending function and the program recommending method of the present invention, when a recommended program is started on another channel while the user is viewing a program, it is possible to inform the user of it clearly and effectively. The picture receiver having program recommending function and the program recommending method of the present invention are useful for a picture receiver which accumulates program information and provides the user with recommended programs in accordance with the user's antecedent viewing information and liking information.

## Claims

1. A picture receiver (100), comprising:
a program information accumulating means (101) for accumulating program information;
a viewing information obtaining means (102) for obtaining program information of a currently viewed program;
a program recommending means (103) for specifying a recommended program being on the air or to be put on the air within a predetermined time in accordance with program information from the program information accumulating means (101), program information of the currently viewed program from the viewing information obtaining means (102), and a predetermined recommendation standard; and
a picture displaying means (104, 105) for displaying two pictures of the recommended program and the currently viewed program in accordance with information from the program recommending means (103),
**characterised in that**
the program recommending means (103) judges whether or not the recommended program matches the currently viewed program, and
the picture displaying means (104, 105) executes two-picture display only when the program recommending means (103) judges that the recommended program does not match the currently viewed program.

2. The picture receiver of claim 1, further comprising:
a user's input means (106) for accepting user's input,
wherein the picture displaying means (104, 105) shifts the mode to one-picture display of either the recommended program or the currently viewed program in accordance with input information from the user's input means (106).

3. A program recommending method, comprising the steps of:
accumulating program information;
obtaining program information of a currently viewed program; specifying a recommended program being on the air or to be put on the air within a predetermined time in accordance with the accumulated program information, program information of the currently viewed program, and a predetermined recommendation standard;
**characterised by**
displaying two pictures of the recommended program specified and the currently viewing program,
when the recommended program does not match the currently viewed program.

4. The program recommending method of claim 3, further comprising:
a step of shifting the mode from two-picture display to one-picture display of either the recommended program or the currently viewed program in accordance with user's input.

## Patentansprüche

1. Bildempfänger (100) mit:
Programminformationen-Speichermitteln (101) zum Speichern von Programminformationen;
Fernseh-Informationen-Erhaltungsmitteln (102) zum Erhalten von Programminformationen eines aktuell gesehenen Programms;
Programm-Empfehlungsmitteln (103) zum Spezifizieren eines empfohlenen Programms, das gerade gesendet wird oder innerhalb eines festgelegten Zeitraums gesendet werden soll, entsprechend den Programminformationen aus den Programminformationen-Speichermitteln (101), Programminformationen des aktuell gesehenen Programms von den Femseh-Informationen-Erhaltungsmitteln (102) und einem festgelegten Empfehlungsstandard; und
Bildanzeigemitteln (104, 105) zum Anzeigen von zwei Bildern des empfohlenen Programms und des aktuell gesehenen Programms entsprechend Informationen von den Programm-Empfehlungsmitteln (103),
**dadurch gekennzeichnet, dass**
die Programm-Empfehlungsmittel (103) entscheiden, ob das empfohlene Programm mit dem aktuell gesehenen Programm übereinstimmt oder nicht, und
die Bildanzeigemittel (104, 105) eine Zweibild-Anzeige nur dann durchführen, wenn die Programm-Empfehlungsmittel (103) entscheiden, dass das empfohlene Programm nicht mit dem aktuell gesehenen Programm übereinstimmt.

2. Bildempfänger nach Anspruch 1, der weiterhin Nutzer-Eingabemittel (106) zum Annehmen einer Nutzer-Eingabe aufweist, wobei die Bildanzeigemittel (104, 105) den Modus in eine Einbild-Anzeige entweder des empfohlenen Programms oder des aktuell gesehenen Programms entsprechend Eingabe-Informationen von den Nutzer-Eingabemitteln (106) ändern.

3. Programmempfehlungsverfahren mit den folgenden Schritten:
Speichern von Programminformationen;
Erhalten von Programminformationen eines aktuell gesehenen Programms und
Spezifizieren eines empfohlenen Programms, das gerade gesendet wird oder innerhalb eines festgelegten Zeitraums gesendet werden soll, entsprechend den gespeicherten Programminformationen, Programminformationen des aktuell gesehenen Programms und einem festgelegten Empfehlungsstandard,
**gekennzeichnet durch** Anzeigen von zwei Bildem des spezifizierten empfohlenen Programms und des aktuell gesehenen Programms, wenn das empfohlene Programm nicht mit dem aktuell gesehenen Programm übereinstimmt.

4. Programmempfehlungsverfahren nach Anspruch 3, das weiterhin einen Schritt des Änderns des Modus von der Zweibild-Anzeige in eine Einbild-Anzeige entweder des empfohlenen Programms oder des aktuell gesehenen Programms entsprechend einer Nutzer-Eingabe aufweist.

## Revendications

1. Récepteur d'images (100) comprenant :
un moyen d'accumulation d'informations de programmes (101) destiné à accumuler des informations de programmes ;
un moyen d'obtention d'informations de visionnage (102) destiné à obtenir des informations de programme sur un programme actuellement regardé ;
un moyen de recommandation de programme (103) destiné à spécifier un programme recommandé étant en cours d'émission ou devant être émis dans un temps prédéterminé, en conformité avec des informations de programme provenant du moyen d'accumulation d'informations de programmes (101), des informations de programme sur le programme actuellement regardé provenant du moyen d'obtention d'informations de visionnage (102), et une norme de recommandation prédéterminée ; et
un moyen d'affichage d'images (104, 105) destiné à afficher deux images du programme recommandé et du programme actuellement regardé, en conformité avec des informations provenant du moyen de recommandation de programme (103),
**caractérisé en ce que :**
le moyen de recommandation de programme (103) estime si le programme recommandé concorde ou non avec le programme actuellement regardé, et
le moyen d'affichage d'images (104, 105) exécute un affichage de deux images seulement lorsque le moyen de recommandation de programme (103) estime que le programme recommandé ne concorde pas avec le programme actuellement regardé.

2. Récepteur d'images selon la revendication 1, comprenant en outre :
un moyen d'entrée utilisateur (106) destiné à accepter une entrée utilisateur,
dans lequel le moyen d'affichage d'images (104, 105) fait passer le mode à l'affichage d'une image soit du programme recommandé soit du programme actuellement regardé, en conformité avec des informations d'entrée provenant du moyen d'entrée utilisateur (106).

3. Procédé de recommandation de programme, comprenant les étapes consistant à :
accumuler des informations de programmes ;
obtenir des informations de programme sur un programme actuellement regardé ; spécifier un programme recommandé étant en cours d'émission ou devant être émis dans un temps prédéterminé, en conformité avec les informations de programmes accumulées, des informations de programme sur le programme actuellement regardé, et une norme de recommandation prédéterminée ;
**caractérisé par** :
l'affichage de deux images du programme recommandé spécifié et du programme actuellement regardé, lorsque le programme recommandé ne concorde pas avec le programme actuellement regardé.

4. Procédé de recommandation de programme selon la revendication 3, comprenant en outre :
une étape consistant à faire passer le mode de l'affichage de deux images à l'affichage d'une image soit du programme recommandé soit du programme actuellement regardé, en conformité avec une entrée d'utilisateur.
